# FASCICULE DE BREVET EUROPEEN

(11) **EP 3 030 395 B1**
(45) Date de publication et mention de la délivrance du brevet: **21.04.2021**
(21) Numéro de dépôt: 14747937.2
(22) Date de dépôt: 06.08.2014
(51) Int. Cl.: B29C 48/10, B29C 55/28, B65D 33/25, B29L 31/00

(54) **PROCÉDÉ DE FABRICATION PAR EXTRUSION GONFLAGE D'UN SACHET**
VERFAHREN ZUR HERSTELLUNG EINES BEUTELS MITTELS VON BLASFOLIENEXTRUSION
METHOD FOR MANUFACTURING A BAG BY MEANS OF BLOWN FILM EXTRUSION

(30) Priorité: 06.08.2013 FR 1357823
(43) Date de publication de la demande: 15.06.2016
(73) Titulaire: S2F Flexico, 60119 Henonville (FR)
(72) Inventeur: GEORGES, Philippe, F-60500 Chantilly (FR); BOIS, Henri, F-92200 Neuilly sur Seine (FR); DELASALLE, William, F-60119 Cresnes (FR)
(74) Mandataire: Regimbeau
(86) Numéro de dépôt international: PCT/EP2014/066891
(87) Numéro de publication internationale: WO 2015/018859

(56) Documents cités:
- EP-A1- 0 510 797
- WO-A1-2013/076120
- JP-A- H0 724 926
- JP-A- 2011 036 642
- US-A- 3 380 481
- US-A- 4 929 487
- US-A- 5 511 884
- US-A- 5 962 040
- US-A1- 2008 226 203
- US-A1- 2008 285 897
- US-A1- 2009 025 191
- US-A1- 2010 209 020
- US-B1- 6 185 796

## Description

### DOMAINE DE L'INVENTION

L'invention concerne le domaine des dispositifs de fermeture pour sachets, sacs ou équivalents.

### ARRIERE-PLAN TECHNOLOGIQUE

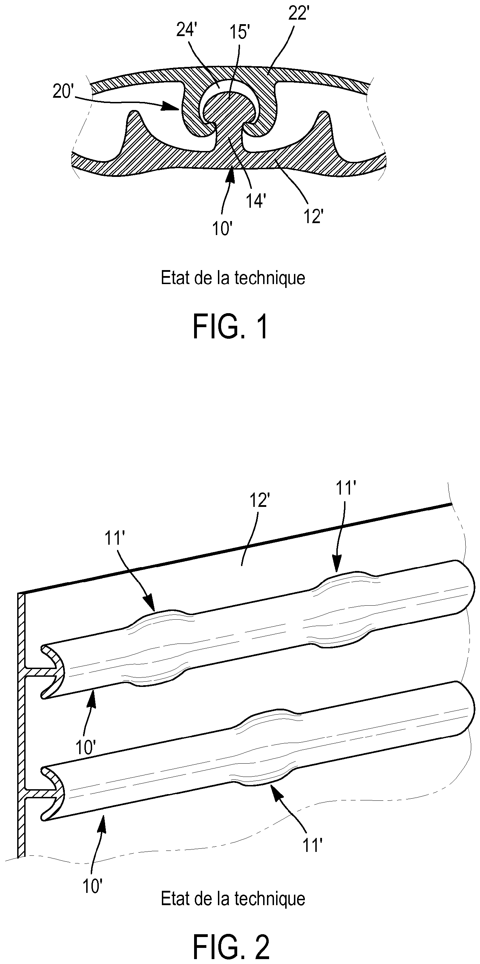

Plus précisément la présente invention concerne les dispositifs de fermeture à base de profilés complémentaires 10', 20' portés par des voiles ou parois support opposés respectifs 12', 22' tels qu'illustrés à titre d'exemple non limitatif sur la figure 1 annexée. De nombreuses variantes de réalisation du dispositif illustré sur la figure 1 ont déjà été proposées et tombent dans le champ de la présente invention.

Généralement, les profilés complémentaires précités sont formés d'éléments mâle/femelle complémentaires, l'élément mâle comprenant une tige 14' solidaire du voile ou de la paroi 12' et munie d'une protubérance élargie 15' à son sommet, tandis que l'élément femelle 20' peut être formé d'une gorge 24' à bords convergents présentant en section une cavité complémentaire de la protubérance 15'.

Des dispositifs de fermeture comprenant plusieurs profilés complémentaires parallèles ont également été proposés, afin d'améliorer la fermeture et l'étanchéité des sachets sur lesquels sont fixés ces dispositifs.

On trouvera des exemples de profilés connus dans les documents US 2008-285897, US 2009-025191, US 4929487, US 2010-209020 et US 3380481.

Néanmoins, la Demanderesse s'est aperçue que, lorsque les dispositifs de fermeture comprenaient des profilés multiples, et en particulier des profilés complémentaires du type mâle/mâle ou femelle/femelle, notamment en forme de flèche, la coextrusion des profilés complémentaires avec leur voile support et le film destiné à former les parois du sachet tend à déformer les dispositifs de fermeture, en particulier lorsque le dispositif est formé par extrusion gonflage.

Le procédé d'extrusion-gonflage consiste à extruder la matière, généralement thermoplastique, à travers une filière annulaire puis à la gonfler pour former une gaine qui est ensuite refroidie et enroulée.

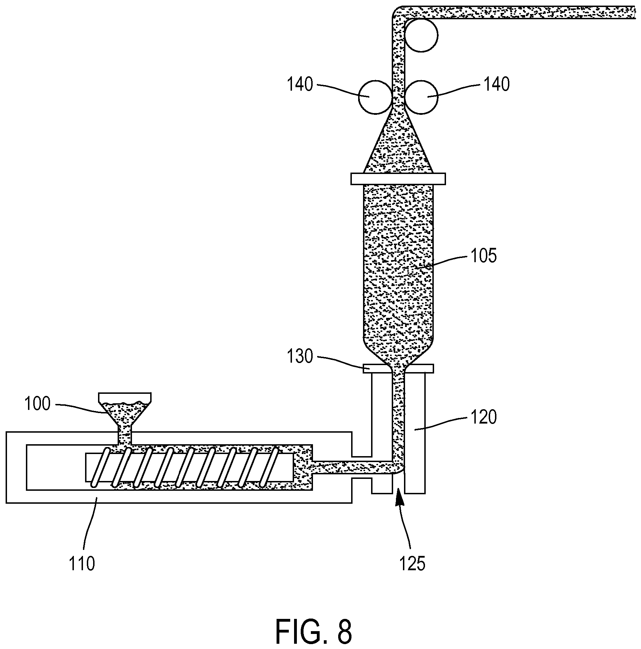

Un exemple de réalisation d'une machine de fabrication par extrusion gonflage est illustré en figure 8. Au cours d'une première étape, de la matière plastique, généralement à base de polyéthylène, est introduite dans une extrudeuse.

Au cours d'une deuxième étape, la matière plastique est chauffée et extrudée de manière à la plastifier et à former, à travers une filière annulaire, un film de forme annulaire.

Au cours d'une troisième étape, de l'air est soufflé à l'intérieur du film afin de le gonfler et de former une gaine (ou bulle). Le taux de gonflage (rapport entre le diamètre de la gaine après gonflage et le diamètre du film en sortie de filière) est généralement compris entre 1.5 et 3.5 pour obtenir de bonnes qualités d'extrusion. De l'air est par ailleurs soufflé sur la gaine depuis l'extérieur de celle-ci par un système d'anneaux afin de refroidir le film extrudé et gonflé.

Au cours d'une quatrième étape, le film est alors aplati à l'aide de rouleau pinceurs.

Ce procédé permet d'obtenir des films très fins. Néanmoins, lorsque le film, qui est destiné à former les parois d'un sachet, est coextrudé avec un dispositif de fermeture comprenant plusieurs profilés complémentaires, la rétractation à l'étirage (« necking » en anglais) en sortie de filière du dispositif de fermeture se fait différemment du film. Cette différence de rétractation crée des contraintes à l'interface, notamment entre le dispositif de fermeture et le film, qui ont pour effet de rétracter ou de dilater les voiles support, et donc d'écarter ou rapprocher respectivement les profilés complémentaires les uns des autres.

Cette déformation a donc pour effet de créer des espaces entre les profilés complémentaires lors de leur engagement susceptibles de laisser passer des fluides et/ou de fines particules contenues dans le sachet, ou au contraire de les rapprocher à un tel point que les profilés se collent entre eux. Par ailleurs, les dispositifs de fermeture ainsi obtenus sont plus difficiles à fermer par engagement mutuel des profilés complémentaires associés, et risquent de s'ouvrir plus facilement.

Or il est nécessaire, pour certains sachets, de réaliser des dispositifs de fermeture à multiples profilés complémentaires, formés intégralement avec le film et de préférence par extrusion-gonflage. C'est le cas notamment des dispositifs de fermeture configurés pour générer une sensation tactile et un effet sonore lors de sa fermeture et son ouverture, c'est-à-dire respectivement lors de l'engagement et de la séparation des profilés. Un exemple de tels dispositifs a été décrit dans le document WO 2013/076120. En particulier ce document décrit un dispositif de fermeture pour sachets ou équivalents comprenant deux voiles support ou parois 12' pourvus sur leur face interne d'un ensemble de fermeture complémentaire comprenant une série de profilés complémentaires 10' qui s'étendent parallèlement selon une direction principale s'étendant selon un axe longitudinal (figure 2). Au moins l'un des profilés complémentaires 10' présente des altérations séquentielles 11' selon une direction perpendiculaire aux voiles support. Ces altérations séquentielles peuvent comprendre des écrasements séquentiels des profilés en prise, de sorte que les écrasements séquentiels réalisent un évasement des deux profilés complémentaires dans le sens de la largeur transversale à la direction d'élongation du dispositif de fermeture, des incisions sans enlèvement de matière, éventuellement étirées afin de former des découpes, et/ou des découpes avec enlèvement de matière.

Or, en pratique, il s'avère nécessaire de réaliser ces dispositifs de fermeture par extrusion gonflage, ce procédé permettant d'obtenir facilement et pour un coût raisonnable des sachets comprenant un dispositif de fermeture formé intégralement et en une seule pièce avec ses parois. Ce procédé de fabrication permet en effet d'éviter de rapporter les ensembles de fermeture après avoir réalisé les parois du sachet.

Il a donc été envisagé de corriger la forme de la filière de l'extrudeuse, afin d'anticiper les déformations des profilés dus au gonflage de la gaine. Toutefois, la Demanderesse s'est aperçue qu'une telle correction ne suffisait pas pour garantir l'engagement des profilés complémentaires. En effet, il s'avère que les profilés complémentaires obtenus à l'aide d'une filière corrigée ont tendance à se coller les uns aux autres, lorsque la correction est effectuée de sorte à les rapprocher par anticipation du gonflage du film, ou au contraire à venir se coller au film si la correction consiste à les écarter les uns des autres.

### RESUME DE L'INVENTION

Un objectif de l'invention est donc de proposer un procédé de fabrication par extrusion-gonflage d'un dispositif de fermeture et un dispositif de fermeture associé, comprenant au moins trois profilés complémentaires, qui soit plus étanche que les dispositifs de fermeture multiple connus et qui puisse facilement être obtenu pour un coût modéré.

Un autre objectif de l'invention est de proposer un procédé de fabrication par extrusion-gonflage d'un dispositif de fermeture à effets tactiles et sonores et un dispositif de fermeture à effets tactiles et sonores associé, dont l'étanchéité est améliorée pour un coût modéré, et qui puisse être obtenu notamment par un procédé d'extrusion gonflage.

Pour cela, l'invention propose un procédé de fabrication d'un sachet par extrusion gonflage tel que défini en revendication 1 annexée.

Certaines caractéristiques préférées mais non limitatives du procédé de fabrication sont les suivantes :
- le taux de gonflage est inférieur à 1.5,
- le taux de gonflage est inférieur à 1.3,
- le taux de tirage est compris entre 5 et 15,
- au cours de l'étape d'extrusion, les profilés complémentaires de chaque ensemble de fermeture sont formés intégralement avec leur base respective par l'intermédiaire de la tige de liaison associée,
- les profilés complémentaires sont du type mâle/mâle ou femelle/femelle,
- au moins l'un des ensemble de fermeture comprend au moins quatre profilés complémentaires, lesdits profilés complémentaires de l'au moins un ensemble de fermeture formant au moins deux groupes de profilés complémentaires s'étendant respectivement depuis au moins deux bases distinctes, chacune de ces bases distinctes étant reliée au film par l'intermédiaire de la même base et d'une tige de liaison associée,
- la tige de liaison s'étend de manière centrale depuis la base de l'ensemble de fermeture correspondant,
- la base comprend deux bords longitudinaux s'étendant sensiblement parallèlement à l'axe longitudinal, et le procédé de fabrication comprend en outre une étape au cours de laquelle l'un des bords longitudinaux de la base est fixé localement au film,
- le dispositif comprend en outre une étape au cours de laquelle tout ou partie des profilés complémentaires de l'un au moins des ensembles de fermeture est séquentiellement altéré, les altérations séquentielles ainsi formées s'étendant transversalement à l'axe longitudinal,
- l'un au moins des profilés complémentaires est dépourvu d'altérations séquentielles,
- la tige de liaison est discontinue suivant sa direction longitudinale selon l'axe longitudinal,
- les profilés complémentaires sont formés intégralement avec au moins une base intermédiaire, reliée à la base par l'intermédiaire d'une tige de liaison intermédiaire s'étendant parallèlement à l'axe longitudinal entre la base la base intermédiaire et adaptée pour maintenir la base intermédiaire à distance de la base, et
- l'un au moins des ensembles de fermeture comprend au moins quatre profilés complémentaires, et dans lequel les profilés complémentaires sont formés intégralement avec au moins une base intermédiaire, reliée à la base par l'intermédiaire d'une tige de liaison intermédiaire s'étendant parallèlement à l'axe longitudinal entre la base la base intermédiaire et adaptée pour maintenir la base intermédiaire à distance de la base.

Selon un deuxième aspect, l'invention propose également un sachet tel que défini dans le jeu de revendications annexées.

### BREVE DESCRIPTION DES DESSINS

D'autres caractéristiques, buts et avantages de la présente invention apparaîtront mieux à la lecture de la description détaillée qui va suivre, et au regard des dessins annexés donnés à titre d'exemples non limitatifs et sur lesquels :
La figure 1 est une vue en coupe d'un premier exemple de dispositif de fermeture conforme à l'art antérieur,
La figure 2 est une vue en perspective d'un ensemble de fermeture d'un dispositif de fermeture conforme à l'art antérieur, et
La figure 3 est une vue en coupe d'un exemple de réalisation d'un dispositif de fermeture conforme à un premier mode de réalisation de l'invention,
La figure 4 est une vue en coupe d'un exemple de réalisation d'un dispositif de fermeture conforme à un deuxième mode de réalisation de l'invention,
La figure 5 est une vue en coupe d'un exemple de réalisation d'un dispositif de fermeture conforme à un troisième mode de réalisation de l'invention,
La figure 6 est une vue en perspective d'un exemple de réalisation d'un ensemble de fermeture d'un dispositif de fermeture conforme à un quatrième mode de réalisation de l'invention,
La figure 7 est une vue en coupe d'un exemple de réalisation d'un ensemble de fermeture conforme à un quatrième mode de réalisation de l'invention,
La figure 8 illustre un exemple de machine pour un procédé de fabrication par extrusion gonflage, et

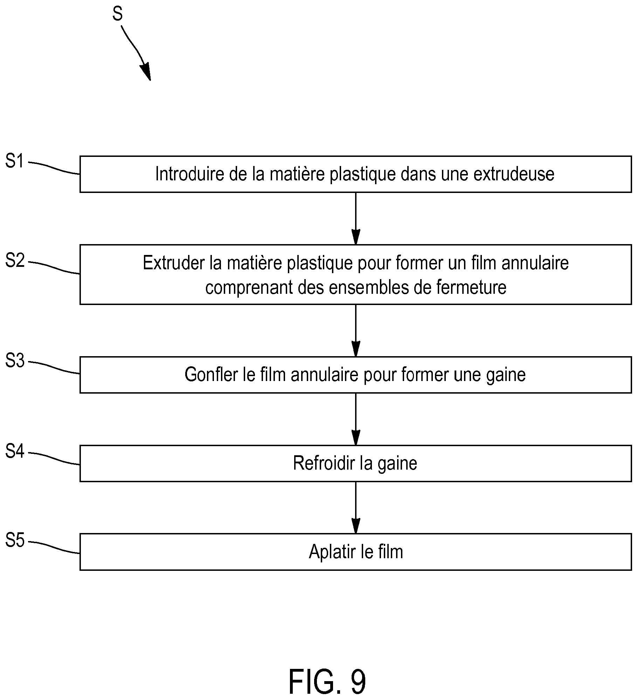

La figure 9 est un organigramme illustrant différentes étapes d'un exemple de procédé de fabrication par extrusion gonflage conforme à l'invention.

### DESCRIPTION DETAILLEE D'UN MODE DE REALISATION

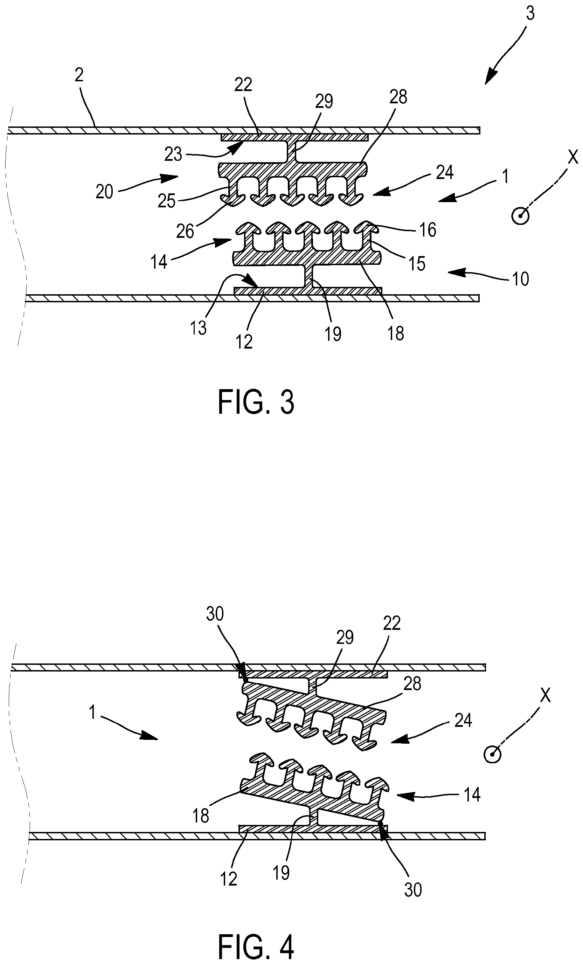

Un sachet 3 pouvant comprendre un dispositif de fermeture 1 conforme à l'invention est illustré sur les figures 3 à 7. Le sachet comprend deux parois 2 principales pourvues sur leur face interne 13, 23 d'un ensemble de fermeture 10, 20 complémentaire comportant une série de profilés complémentaires 14, 24 qui s'étendent parallèlement selon une direction principale s'étendant selon un axe longitudinal X. De préférence, chaque ensemble de fermeture 10, 20 comprend au moins trois profilés complémentaires, par exemple entre trois et six, et est formé intégralement et en une seule pièce avec les parois du sachet 3.

Il peut s'agir de profilés complémentaires 14, 24 de type mâle/mâle, femelle/femelle, ou encore de crochets, etc. composant de façon classique en soi un sachet 3. Les modalités particulières de réalisation d'un tel sachet 3, dans sa structure générale, ne seront pas décrites dans le détail par la suite.

Ainsi, les profilés complémentaires 14, 24 peuvent comprendre une tige 15, 25 globalement perpendiculaire au film 2 et munie en son sommet opposé au film 2 d'une protubérance évasée 16, 26, par exemple en forme de flèche. Ces profilés complémentaires 14, 24 sont adaptés pour venir en prise au niveau de leur protubérance évasée 16, 26.

Les parois 2 du sachet 3 peuvent faire l'objet de nombreux modes de réalisation. Il s'agit de préférence de parois 2 en matériaux thermoplastiques. Ces parois 2 peuvent être mono ou multicouches et mono ou multi matériaux.

De préférence, le sachet 3 est obtenu par extrusion gonflage S.

Pour cela, au cours d'une première étape S1, de la matière plastique 100 comprenant un polymère ou un mélange de polymères, est introduit dans une extrudeuse 110. La matière plastique 100 comprend typiquement du polypropylène, du polyéthylène, du polyéthylène haute densité et/ou du polyéthylène basse densité et leurs copolymères associés, des copolymères d'éthylène et/ou des copolymères de propylène.

Au cours d'une deuxième étape S2, la matière plastique 100 est chauffée et extrudée de manière à la plastifier et à former, à travers une filière annulaire 120, un film de forme annulaire dont l'épaisseur est sensiblement égale à celle de l'entrefer de la filière 120. Le film est destiné à former les parois du sachet 3. En sortie de filière 120, le film annulaire obtenu comporte en outre les ensembles de fermeture 10, 20 sur ses faces internes 13, 23.

Pour cela, l'extrudeuse 110 comprend, de manière connue en soi, une filière 120 dont la fente annulaire comprend deux séries de gorges s'étendant en regard configurées pour conformer les ensembles de fermeture 10, 20, et dont la forme correspond donc à celles desdits ensembles.

Au cours d'une troisième étape S3, de l'air 125 est soufflé à l'intérieur du film 2 afin de le gonfler et de former une gaine 105 (ou bulle).

Dans une forme de réalisation, le taux de gonflage (rapport entre le diamètre de la gaine 105 après gonflage et le diamètre du film 2 en sortie de filière 120) est inférieur à 1.5, de préférence inférieur à 1.3. La Demanderesse s'est en effet aperçue les sachets obtenus avec un taux de gonflage conventionnel supérieur à 1.5 avait pour inconvénient de faire tourner la gaine 105, rendant ainsi le procédé instable, et de déformer les profilés complémentaires 14, 24 en les étendant transversalement à la direction de défilement du film 2. En comparaison, la mise en oeuvre d'un taux de gonflage inférieur à 1.5, de préférence inférieur à 1.3, permet d'obtenir des ensembles de fermeture 10, 20 dont la section est sensiblement homothétique par rapport à la section de la fente de la filière 120, et d'améliorer nettement la stabilité de la gaine 105.

Le taux de tirage (rapport entre la vitesse du banc de tirage, c'est-à-dire la vitesse du film au niveau des rouleaux pinceurs 140, et la vitesse de la matière en sortie de filière 120) peut par ailleurs être compris entre 5 et 15. De tels taux de gonflage et de tirage permettent alors de choisir une filière 120 avec un entrefer (dimensions de la fente) suffisamment faible pour obtenir un sachet 3 dont les parois sont de faible épaisseur tout en présentant de bonnes propriétés mécaniques et une bonne homogénéité de matière.

Au cours d'une quatrième étape S4, de l'air est envoyé sur la gaine 105 afin de refroidir le film 2 extrudé et gonflé et les ensembles de fermeture 10, 20.

Dans une première forme de réalisation, l'air peut être soufflé depuis l'extérieur de la gaine 105 par un système d'anneaux 130.

En plus ou de manière alternative, de l'air peut également être soufflé depuis l'intérieur de la gaine 105 afin de refroidir celle-ci et d'éviter le collage des faces internes de la gaine 105 lors du pincement de celle-ci par les rouleaux pinceurs 140 (cinquième étape S5).

De préférence, le refroidissement de la gaine 105 est suffisant pour que la gaine 105 atteigne une température inférieure à sa température de cristallisation dès sa formation par gonflage. Les systèmes de refroidissement (externe et/ou interne) sont donc de préférence disposés à la sortie de la filière 120.

Au cours d'une cinquième étape S5, la gaine 105 est alors aplatie à l'aide des rouleaux pinceurs 140, configurés pour pincer la gaine 105 et réaliser l'étanchéité permettant de former ladite gaine 105 par gonflage.

Afin d'améliorer l'étanchéité du dispositif de fermeture 1, les profilés complémentaires 14, 24 de chacun des ensembles de fermeture 10, 20 sont formés intégralement et en une seule pièce avec une base 18, 28 respective, reliée au film 2 par l'intermédiaire d'une tige de liaison 19, 29 associée s'étendant parallèlement à la direction longitudinale X et adaptée pour maintenir la base 18, 28 à distance dudit film 2.

La tige de liaison 19, 29 présente une largeur (dimension suivant la direction transversale à l'axe longitudinal X) sensiblement plus faible que la largeur (dimension suivant la direction transversale à l'axe longitudinale) de la base 18, 28, par exemple de l'ordre de deux à quinze fois plus faible, typiquement de cinq à dix fois plus faible (selon le nombre de profilés complémentaires 14, 24 portés par la base 18, 28). On notera que la direction longitudinale X correspond à la direction de défilement du film 2 dans la machine lors du procédé de fabrication S.

La largeur des tiges 19, 29 peut en outre être inférieure ou égale à la hauteur des bases 18, 28 (dimension de la base 18, 28 suivant l'axe défini par la direction d'extension des tiges 19, 29 depuis le film 2). Ici, la largeur des tiges 19, 29 est sensiblement égale à la hauteur de la base 18, 28 correspondante.

La tige de liaison 19, 29 isole ainsi les profilés complémentaires 14, 24 du film 2, ce qui permet de dé-corréler la déformation du film de celle des profilés complémentaires 14, 24, notamment lors du gonflage et du refroidissement de la gaine 105. Par ailleurs, la faible dimension transversale de la tige permet de limiter la transmission des efforts et des déformations entre le film et la base 18, 28 associée. En effet, étant de faible dimension transversale, la tige 19, 29 n'est pas déformée (ou du moins de manière négligeable) lors du gonflage et du refroidissement de la gaine 105 lors du procédé de fabrication S du sachet 3, et ne communique donc aucune déformation (en rétractation ou en étirement) du film à la base, et inversement. Les déformations éventuelles du film ne sont donc plus transmises à la base 18, 28 supportant les profilés complémentaires 14, 24, dans la mesure où cette base 18, 28 n'est connectée au film que par l'intermédiaire de la tige de liaison 19, 29. En d'autres termes, grâce à la présence d'une tige 19, 29 au niveau de chaque ensemble de fermeture 10, 20, les profilés complémentaires 14, 24 et le film se comportent comme s'ils étaient extrudés indépendamment les uns des autres.

La base 18, 28 supportant les profilés complémentaires 14, 24 n'étant pas déformée lors du gonflage et du refroidissement de la gaine 105, on obtient donc un dispositif de fermeture 1 dont les profilés complémentaires 14, 24 s'étendent sensiblement parallèlement les uns par rapport aux autres, ce qui améliore efficacement l'étanchéité du dispositif de fermeture 1 sans avoir besoin de modifier leur profil ni le protocole de fabrication du dispositif par extrusion gonflage.

La présence de la tige de liaison 19, 29 permet en outre de former une charnière entre le film 2 et les profilés complémentaires 14, 24 qui rend la séparation des ensembles de fermeture 10, 20 plus difficile et permet de réduire les risques d'ouverture accidentelle d'un sachet 3 muni du dispositif 1, par exemple en raison des efforts appliqués par le contenu du sachet 3 sur le dispositif de fermeture 1. L'ouverture du sachet 3 est donc rendue plus difficile, dans la mesure où, d'une part, les ensembles de fermeture 10, 20 ne sont pas déformés grâce à la présence de la tige de liaison 19, 29 qui limite la transmission des efforts (dus aux rétractations/dilatations) entre le film 2et la base 18, 28, et d'autre part la sollicitation transversale exercée par les parois 2 sur le dispositif de fermeture 1 est amortie par l'articulation du film 2 autour de la tige.

Dans une forme de réalisation, la base 18, 28 des ensembles de fermeture 10, 20 peut être fixée au film 2 dans une zone adjacente à l'un de ses bords longitudinaux 30 afin de former une charnière, par exemple à l'aide d'une soudure locale ou par collage. Cette fixation locale d'un bord 30 de la base 18, 28 permet alors de créer un centre de rotation pour l'ensemble de fermeture 10, 20 et améliorer ainsi la résistance à l'ouverture du dispositif de fermeture 1. En effet, la tige de liaison 19, 29 confère une certaine mobilité aux profilés complémentaires 14, 24 par rapport au film 2, tandis que la fixation locale joue un rôle de charnière et transforme les efforts subits par les éléments de fermeture en efforts de cisaillement.

Dans une forme de réalisation, les bords longitudinaux en regard des bases 18, 28 peuvent être fixés au film 2. En variante, les fixations locales peuvent être réalisées au niveau des bords longitudinaux opposés 30 des bases 18, 28, afin d'améliorer encore l'effet charnière, comme illustré sur la figure 4. Le cas échéant, les ensembles de fermeture 10, 20 (tiges de liaison 19, 29, bases 18, 28 et profilés complémentaires 14, 24) sont décalés afin de garantir la correspondance des profilés complémentaires 14, 24 et améliorer leur engagement mutuel.

Selon une forme de réalisation, les tiges de liaison 19, 29 s'étendent de manière centrale par rapport à la base 18, 28 qu'elles relient au film 2. Avantageusement, les profilés complémentaires 14, 24 sont alors fixés sur la base 18, 28 de telle sorte que l'ensemble de fermeture 10, 20 est sensiblement symétrique.

Par exemple, les ensembles de fermeture 10, 20 peuvent comprendre chacun cinq profilés complémentaires 14, 24, répartis symétriquement sur la base 18, 28 par rapport à la tige de liaison 19, 29. Ainsi, comme illustré sur la figure 3, l'un des profilés 14, 24 s'étend dans le prolongement de la tige de liaison 19, 29, tandis que les quatre autres profilés complémentaires 14, 24 s'étendent de part et d'autre du profilé complémentaire central 14, 24.

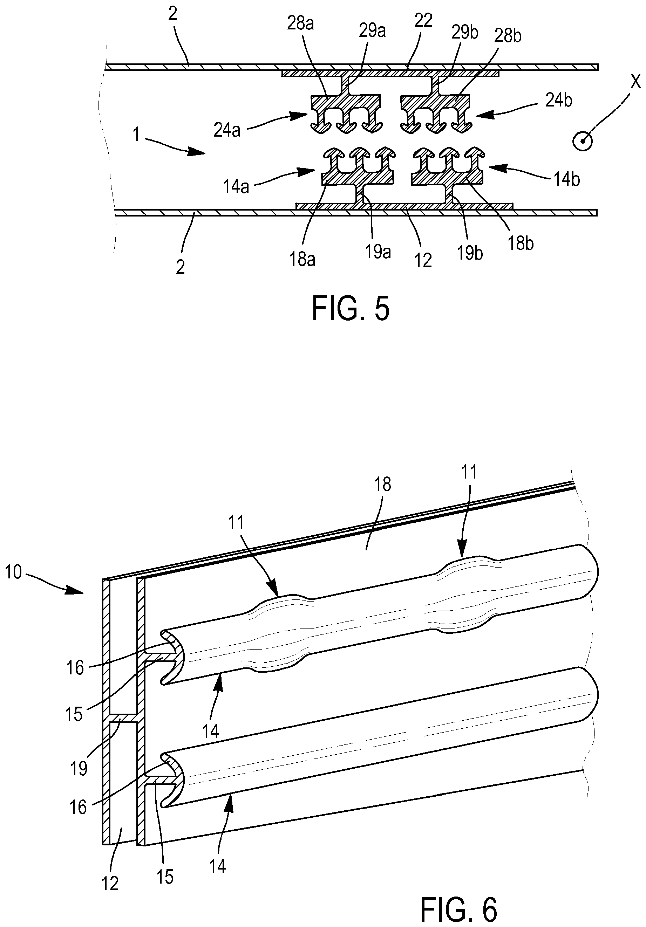

Les profilés complémentaires 14, 24 des ensembles de fermeture 10, 20 peuvent également être fixés sur plusieurs bases 18a, 18b, 28a, 28b distinctes. Ainsi, comme illustré sur la figure 5, une première partie des profilés complémentaires 14a, 24a peut s'étendre dans le prolongement d'une première tige de liaison 19a, 29a depuis une première base 18a, 28a, tandis que l'autre partie des profilés complémentaires 14b, 24b s'étend dans le prolongement de la tige de liaison 19b, 29b d'une deuxième base 18b, 28b, la première base 18a, 28a et la deuxième base 18b, 28b étant connectées au film par l'intermédiaire de leur tige de liaison 19a, 29a, 19b, 29b respective. La première base 18a, 28a et la deuxième base 18b, 28b s'étendent de préférence parallèlement au film et dans un même plan. Par ailleurs, comme illustré sur la figure 5, film de sorte que la distance entre les bases 18a-18b, 28a- 28b soit plus grande que l'écart entre deux profilés adjacents afin de former deux groupes distants de profilés complémentaires 14a, 14b, 24a, 24b.

En variante, les profilés complémentaires 14a, 14b, 24a, 24b peuvent également être fixés, via leur bases 18a, 18b, 28a, 28b respective sur le film de manière à s'étendre à égale distance les uns des autres.

Dans une variante de réalisation, lorsque l'ensemble de fermeture 10, 20 comprend de nombreux profilés complémentaires 14, 24, les profilés complémentaires 14, 24 peuvent être fixés au film par l'intermédiaire de bases intermédiaires 18c, qui sont elles-mêmes fixées sur la base 18 à l'aide de tiges de liaison correspondantes 19c. Cette variante de réalisation présente l'avantage de filtrer les déformations dues au retrait à l'étirage du film grâce à la tige 19, mais également celles dues au retrait éventuel de la base 18. En effet, lorsque l'ensemble de fermeture 10, 20 comprend de nombreux profilés complémentaires, la base 18 correspondante doit être relativement large, de sorte qu'il est possible qu'elle subisse un retrait à l'étirage lors du gonflage et du refroidissement susceptible de déformer les profilés complémentaires 14, 24. Grâce aux bases intermédiaires 18c et à leur tige de liaison respective 19c, il est donc possible de limiter la transmission des efforts aux profilés complémentaires 14, 24, et donc d'améliorer l'étanchéité du dispositif de fermeture 1.

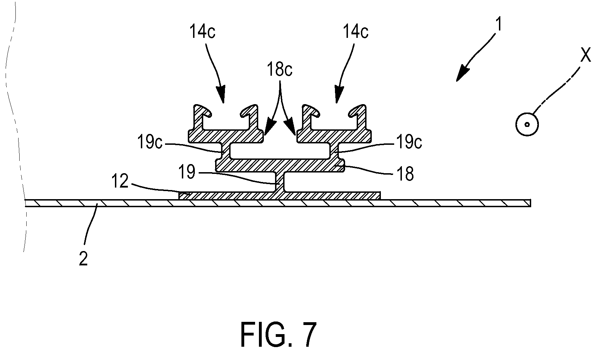

Un exemple d'une telle variante de réalisation est illustré en figure 7. Dans cet exemple, l'ensemble de fermeture 10, 20 10 comprend quatre crochets femelles 14c. Ces crochets femelles 14c sont adaptés pour recevoir des protubérances complémentaires (non illustrées sur les figures), par exemple en forme de flèche. Deux des crochets 14c sont fixés sur une première base intermédiaire 18c, tandis que les deux autres crochets 14c sont fixés à une deuxième base intermédiaire 18c, distante et séparée de la première base intermédiaire 18c. Chaque base intermédiaire 18c est par ailleurs fixée sur une base 18, plus large, par l'intermédiaire d'une tige de liaison intermédiaire 19c respective, la base 18 étant elle-même fixée au film par l'intermédiaire d'une tige de liaison 19.

De préférence, les profilés complémentaires 14c sont formés intégralement avec leur base intermédiaire 18c respective, les tiges de liaison intermédiaire 19c, la base 18, la tige 19 et le film 2.

Les tiges de liaison 19, 19c, 29 peuvent être continues sur toute leur longueur, soit selon l'axe longitudinal X. En variante, elles peuvent être discontinues.

Par ailleurs, les profilés complémentaires 14, 24 peuvent présenter une section constante sur leur longueur, suivant l'axe longitudinal X.

En variante, comme illustré sur la figure 6, les profilés complémentaires 14, 24 peuvent comprendre des altérations séquentielles 11, s'étendant transversalement à l'axe longitudinal X. Les altérations séquentielles sont des modifications locales séquentielles des profilés, qui peuvent notamment comprendre des écrasements séquentiels de tout ou partie des profilés en prise, de sorte que les écrasements séquentiels réalisent un évasement des deux profilés complémentaires 14, 24 en prise dans le sens de la largeur transversale à la direction d'élongation du dispositif de fermeture 1, des incisions sans enlèvement de matières, éventuellement étirées afin de former des découpes, et/ou des découpes avec enlèvement de matière.

Dans cette variante de réalisation, le procédé de fabrication S comprend alors une étape au cours de laquelle tout ou partie des profilés complémentaires 14, 24, 14a, 24a, 14b, 24b de l'un au moins des ensembles de fermeture 10, 20 est altéré séquentiellement, les altérations séquentielles ainsi formées s'étendant transversalement à l'axe longitudinal X. Par exemple, les profilés complémentaires 14, 24, 14a, 24a, 14b, 24b des deux ensembles de fermeture 10, 20 peuvent être mis en prise et tout ou partie des profilés complémentaires peuvent être écrasés séquentiellement de manière à les évaser localement dans le sens transversal à la direction longitudinale X.

On pourra se référer notamment à la demande WO 2013/076120 pour plus de détails sur les altérations séquentielles et leur moyen d'obtention.

Dans cette forme de réalisation, tout ou partie des profilés complémentaires 14, 24 peuvent présenter de telle altérations séquentielles. Ainsi, dans l'exemple illustré en figure 6, l'un des profilés 14 comprend des écrasements séquentiels, tandis que l'autre des profilés 14 est dépourvu d'altération séquentielle.

Les ensembles de fermeture 10, 20 sont de préférence réalisés intégralement et en une seule pièce. Ainsi, au sein de chaque ensemble de fermeture 10, 20, les profilés complémentaires 14, 24, la ou les bases 18, 28, la ou les tiges de liaison 19, 29 et le film 2 sont formés intégralement et en une seule pièce au cours du procédé d'extrusion gonflage S.

Les dilatations/rétractations du film 2 suite à sa coextrusion avec les ensembles de fermeture 10, 20 ne sont donc pas transmis aux bases 18, 28 des profilés complémentaires 14, 24, qui sont donc correctement alignés, ce qui améliore leur engagement mutuel et donc leur étanchéité.

Les ensembles de fermeture 10, 20 peuvent notamment être réalisés dans l'un au moins des matériaux suivants : polypropylène, polyéthylène, polyéthylène haute densité, du polyéthylène basse densité et leurs copolymères, des copolymères d'éthylène et/ou des copolymères de propylène. En particulier, les profilés de fermeture 14, 24, la base 18, 28 et la tige de liaison 19, 29 des ensembles de fermeture 10, 20 peuvent être réalisés dans des matériaux différents choisis dans cette liste de matériaux. En effet, grâce à la tige de liaison 19, 29, les profilés complémentaires 14, 24 ne sont pas déformés malgré le fait que les matériaux constitutifs des profilés complémentaires et du film 2 soient éventuellement différents.

## Revendications

1. Procédé de fabrication (S) d'un sachet (3) par extrusion gonflage, ledit sachet (3) comprenant des parois principales comprenant chacune, sur une face interne (13, 23), un ensemble de fermeture (10, 20) comprenant une série de profilés complémentaires (14, 24, 14a, 24a, 14b, 24b, 14c) qui s'étendent parallèlement selon une direction principale s'étendant selon un axe longitudinal (X), le procédé de fabrication (S) comprenant les étapes suivantes :
- extruder (S2) une matière plastique, de manière à former un film annulaire comprenant les ensembles de fermeture, ledit film annulaire étant destiné à former les parois du sachet (3), et
- gonfler (S5) le film annulaire, de manière à former une gaine (105), le procédé de fabrication (S) étant **caractérisé en ce que** chaque ensemble de fermeture (10, 20) comprend au moins trois profilés complémentaires (14, 24) et **en ce que**, au cours de l'étape d'extrusion (S2), les au moins trois profilés complémentaires (14, 24, 14a, 24a, 14b, 24b, 14c) de chacun des ensembles de fermeture (10, 20) sont formés intégralement avec une même base (18, 28, 18a, 28a, 18b, 28b), reliée au film annulaire (2) par l'intermédiaire d'une tige de liaison (19, 29, 19a, 29a, 19b, 29b) s'étendant parallèlement à l'axe longitudinal (X) entre le film annulaire (2) et la base (18, 28, 18a, 28a, 18b, 28b) et adaptée pour maintenir la base (18, 28, 18a, 28a, 18b, 28b) à distance du film annulaire (2).

2. Procédé de fabrication (S) selon la revendication 1, dans lequel le taux de gonflage est inférieur à 1.5.

3. Procédé de fabrication (S) selon la revendication 2, dans lequel le taux de gonflage est inférieur à 1.3.

4. Procédé de fabrication (S) selon l'une des revendications 1 à 3, dans lequel le taux de tirage est compris entre 5 et 15.

5. Procédé de fabrication (S) selon l'une des revendications 1 à 4, dans lequel, au cours de l'étape d'extrusion (S2), les profilés complémentaires (14, 24, 14a, 24a, 14b, 24b) de chaque ensemble de fermeture (10, 20) sont formés intégralement avec leur base (18, 28, 18a, 28a, 18b, 28b) respective par l'intermédiaire de la tige de liaison (19, 29, 19a, 29a, 19b, 29b) associée.

6. Procédé de fabrication (S) selon l'une des revendications 1 à 5, dans lequel les profilés complémentaires (14, 24, 14a, 24a, 14b, 24b) sont du type mâle/mâle ou femelle/femelle.

7. Procédé de fabrication (S) selon l'une des revendications 1 à 6, dans lequel au moins l'un des ensemble de fermeture (10, 20) comprend au moins quatre profilés complémentaires, lesdits profilés complémentaires (14a, 24a, 14b, 24b) de l'au moins un ensemble de fermeture (10, 20) formant au moins deux groupes de profilés complémentaires s'étendant respectivement depuis au moins deux bases distinctes (18a, 28a, 18b, 28b), chacune de ces bases distinctes (18a, 28a, 18b, 28b) étant reliée au film (2) par l'intermédiaire de la même base (18) et d'une tige de liaison associée (19a, 29a, 19b, 29b).

8. Procédé de fabrication (S) selon l'une des revendications 1 à 7, dans lequel la tige de liaison (19, 29, 19a, 29a, 19b, 29b) s'étend de manière centrale depuis la base (18, 28, 18a, 28a, 18b, 28b) de l'ensemble de fermeture correspondant (10, 20).

9. Procédé de fabrication (S) selon l'une des revendications 1 à 8, dans lequel la base (18, 28, 18a, 28a, 18b, 28b) comprend deux bords longitudinaux s'étendant sensiblement parallèlement à l'axe longitudinal (X), et le procédé de fabrication (S) comprend en outre une étape au cours de laquelle l'un des bords longitudinaux (30) de la base (18, 28, 18a, 28a, 18b, 28b) est fixé localement au film (2).

10. Procédé de fabrication (S) selon l'une des revendications 1 à 9, comprenant en outre une étape au cours de laquelle tout ou partie des profilés complémentaires (14, 24, 14a, 24a, 14b, 24b) de l'un au moins des ensembles de fermeture (10, 20) est altéré séquentiellement, les altérations séquentielles ainsi formées s'étendant transversalement à l'axe longitudinal (X).

11. Procédé de fabrication (S) selon la revendication 10, dans lequel l'un au moins des profilés complémentaires (14, 24, 14a, 24a, 14b, 24b) est dépourvu d'altérations séquentielles.

12. Procédé de fabrication (S) selon l'une des revendications 1 à 11, dans lequel la tige de liaison (19, 29, 19a, 29a, 19b, 29b) est discontinue suivant sa direction longitudinale selon l'axe longitudinal (X).

13. Procédé de fabrication (S) selon l'une des revendications 1 à 12, dans lequel l'un au moins des ensembles de fermeture comprend au moins quatre profilés complémentaires (14, 24), et dans lequel les profilés complémentaires (14, 24) sont formés intégralement avec au moins une base intermédiaire (18c), reliée à la base (18) par l'intermédiaire d'une tige de liaison intermédiaire (19c) s'étendant parallèlement à l'axe longitudinal (X) entre la base (18) et la base intermédiaire (18c) et étant adaptée pour maintenir la base intermédiaire (18c) à distance de la base (18).

14. Procédé de fabrication (S) selon la revendication 13, comprenant au moins deux bases intermédiaires (18c), chacune des bases intermédiaires (18c) étant reliée à la base (18) par l'intermédiaire d'une tige de liaison intermédiaire (19c) respective.

15. Sachet (3) comprenant des parois principales comprenant chacune, sur une face interne (13, 23), un ensemble de fermeture (10, 20) comprenant une série de profilés complémentaires (14, 24, 14a, 24a, 14b, 24b, 14c) qui s'étendent parallèlement selon une direction principale s'étendant selon un axe longitudinal (X), le sachet étant **caractérisé en ce que** chaque ensemble de fermeture (10, 20) comprend au moins trois profilés complémentaires (14, 24) et **en ce qu'**il est obtenu suivant un procédé de fabrication (S) selon l'une des revendications 1 à 14.

## Patentansprüche

1. Verfahren zur Herstellung (S) eines Beutels (3) durch Blasfolienextrusion, wobei der Beutel (3) Hauptwände umfasst, die jeweils auf einer Innenseite (13, 23) eine Verschlusseinheit (10, 20) umfassen, die eine Reihe von ergänzenden Profilen (14, 24, 14a, 24a, 14b, 24b, 14c) umfasst, die sich parallel entlang einer Hauptrichtung erstrecken, die sich entlang einer Längsachse (X) erstreckt, wobei das Verfahren zur Herstellung (S) die folgenden Schritte umfasst:
- Extrudieren (S2) eines Kunststoffmaterials, um einen ringförmigen Film zu bilden, der die Verschlusseinheiten umfasst, wobei der ringförmige Film dazu bestimmt ist, die Wände des Beutels (3) zu bilden, und
- Aufblasen (S5) des ringförmigen Films, um eine Manschette (105) zu bilden,
wobei das Verfahren zur Herstellung (S) **dadurch gekennzeichnet ist, dass** jede Verschlusseinheit (10, 20) mindestens drei ergänzende Profile (14, 24) umfasst, und dadurch, dass im Laufe des Schrittes des Extrudierens (S2) die mindestens drei ergänzenden Profile (14, 24, 14a, 24a, 14b, 24b, 14c) jeder der Verschlusseinheiten (10, 20) in einem Stück mit einer selben Basis (18, 28, 18a, 28a, 18b, 28b) gebildet werden, die mittels eines Verbindungsschafts (19, 29, 19a, 29a, 19b, 29b), der sich parallel zur Längsachse (X) zwischen dem ringförmigen Film (2) und der Basis (18, 28, 18a, 28a, 18b, 28b) erstreckt und angepasst ist, um die Basis (18, 28, 18a, 28a, 18b, 28b) auf Distanz zum ringförmigen Film (2) zu halten, mit dem ringförmigen Film (2) verbunden ist.

2. Verfahren zur Herstellung (S) nach Anspruch 1, wobei die Aufblasrate kleiner als 1,5 ist.

3. Verfahren zur Herstellung (S) nach Anspruch 2, wobei die Aufblasrate kleiner als 1,3 ist.

4. Verfahren zur Herstellung (S) nach einem der Ansprüche 1 bis 3, wobei die Zugraten zwischen 5 und 15 enthalten sind.

5. Verfahren zur Herstellung (S) nach einem der Ansprüche 1 bis 4, wobei im Laufe des Schrittes des Extrudierens (S2) die ergänzenden Profile (14, 24, 14a, 24a, 14b, 24b) jeder Verschlusseinheit (10, 20) jeweils mittels des zugehörigen Verbindungsschafts (19, 29, 19a, 29a, 19b, 29b) in einem Stück mit ihrer Basis (18, 28, 18a, 28a, 18b, 28b) gebildet werden.

6. Verfahren zur Herstellung (S) nach einem der Ansprüche 1 bis 5, wobei die ergänzenden Profile (14, 24, 14a, 24a, 14b, 24b) in der Art Stecker/Stecker oder Buchse/Buchse sind.

7. Verfahren zur Herstellung (S) nach einem der Ansprüche 1 bis 6, wobei mindestens eine der Verschlusseinheiten (10, 20) mindestens vier ergänzende Profile umfasst, wobei die ergänzenden Profile (14a, 24a, 14b, 24b) der mindestens einen Verschlusseinheit (10, 20) mindestens zwei ergänzende Profilgruppen aufweisen, die sich jeweils aus mindestens zwei unterschiedlichen Basen (18a, 28a, 18b, 28b) erstrecken, wobei jede der unterschiedlichen Basen (18a, 28a, 18b, 28b) mittels derselben Basis (18) und eines zugehörigen Verbindungsschafts (19a, 29a, 19b, 29b) mit dem Film (2) verbunden ist.

8. Verfahren zur Herstellung (S) nach einem der Ansprüche 1 bis 7, wobei sich der Verbindungsschaft (19, 29, 19a, 29a, 19b, 29b) zentral aus der Basis (18, 28, 18a, 28a, 18b, 28b) der entsprechenden Verschlusseinheit (10, 20) erstreckt.

9. Verfahren zur Herstellung (S) nach einem der Ansprüche 1 bis 8, wobei die Basis (18, 28, 18a, 28a, 18b, 28b) zwei Längsränder umfasst, die sich im Wesentlichen parallel zur Längsachse (X) erstrecken, und das Verfahren zur Herstellung (S) weiter einen Schritt umfasst, im Laufe dessen einer der Längsränder (30) der Basis (18, 28, 18a, 28a, 18b, 28b) lokal an dem Film (2) befestigt ist.

10. Verfahren zur Herstellung (S) nach einem der Ansprüche 1 bis 9, weiter einen Schritt umfassend, im Laufe dessen alle ergänzenden Profile (14, 24, 14a, 24a, 14b, 24b), oder ein Teil davon, mindestens einer der Verschlusseinheiten (10, 20) sequenziell verändert wird, wobei sich die so gebildeten sequenziellen Veränderungen quer zur Längsachse (X) erstrecken.

11. Verfahren zur Herstellung (S) nach Anspruch 10, wobei mindestens eines der ergänzenden Profile (14, 24, 14a, 24a, 14b, 24b) mit keinen sequenziellen Veränderungen versehen ist.

12. Verfahren zur Herstellung (S) nach einem der Ansprüche 1 bis 11, wobei der Verbindungsschaft (19, 29, 19a, 29a, 19b, 29b) ihrer Längsrichtung folgend entlang der Längsachse (X) unterbrochen ist.

13. Verfahren zur Herstellung (S) nach einem der Ansprüche 1 bis 12, wobei mindestens eine der Verschlusseinheiten mindestens vier ergänzende Profile (14, 24) umfasst, und wobei die ergänzenden Profile (14, 24) in einem Stück mit mindestens einer Zwischenbasis (18c) gebildet sind, die mittels eines Zwischenverbindungsschafts (19c), der sich parallel zur Längsachse (X) zwischen der Basis (18) und der Zwischenbasis (18c) erstreckt, und angepasst ist, um die Zwischenbasis (18c) auf Distanz zur Basis (18) zu halten, mit der Basis (18) verbunden ist.

14. Verfahren zur Herstellung (S) nach Anspruch 13, mindestens zwei Zwischenbasen (18c) umfassend, wobei jede der Zwischenbasen (18c) mittels eines jeweiligen Zwischenverbindungsschafts (19c) mit der Basis (18) verbunden ist.

15. Beutel (3), Hauptwände umfassend, die jeweils auf einer Innenseite (12, 23) eine Verschlusseinheit (10, 20) umfassen, die eine Reihe von ergänzenden Profilen (14, 24, 14a, 24a, 14b, 24b, 14c) umfasst, die sich parallel entlang einer Hauptrichtung erstrecken, die sich entlang einer Längswachse (X) erstreckt, wobei der Beutel **dadurch gekennzeichnet ist, dass** jede Verschlusseinheit (10, 20) mindestens drei ergänzende Profile (14, 24) umfasst, und dadurch, dass er entsprechend einem Verfahren zur Herstellung (S) nach einem der Ansprüche 1 bis 14 erhalten wird.

## Claims

1. A method for manufacturing (S) a bag (3) by blow film extrusion, said bag (3) comprising main walls each comprising, on an internal face (13, 23), a closing assembly (10, 20) comprising a series of complementary profiles (14, 24, 14a, 24a, 14b, 24b, 14c) which extend in parallel in a main direction extending along a longitudinal axis (X), the manufacturing method (S) comprising the following steps:
- extruding (S2) plastic material so as to form an annular film comprising the closing assemblies, said annular film being intended to form the walls of the bag (3), and
- blowing (S5) the annular film so as to form a jacket (105),
the manufacturing method (S) being **characterised in that** each closing assembly (10, 20) comprises at least three complementary profiles (14, 24) and **in that**, during the extrusion step (S2), the at least three complementary profiles (14, 24, 14a, 24a, 14b, 24b, 14c) of each of the closing assemblies (10, 20) are integrally formed with a same base (18, 28, 18a, 28a, 18b, 28b), connected to the annular film (2) by means of a connecting rod (19, 29, 19a, 29a, 19b, 29b) extending in parallel to the longitudinal axis (X) between the annular film (2) and the base (18, 28, 18a, 28a, 18b, 28b) and adapted to keep the base (18, 28, 18a, 28a, 18b, 28b) at a distance from the annular film (2).

2. The manufacturing method (S) according to claim 1, wherein the inflation rate is less than 1.5.

3. The manufacturing method (S) according to claim 2, wherein the inflation rate is less than 1.3.

4. The manufacturing method (S) according to one of claims 1 to 3, wherein the stretch rate is comprised between 5 and 15.

5. The manufacturing method (S) according to one of claims 1 to 4, wherein, during the extrusion step (S2), the complementary profiles (14, 24, 14a, 24a, 14b, 24b) of each closing assembly (10, 20) are integrally formed with their respective base (18, 28, 18a, 28a, 18b, 28b) by means of the associated connecting rod (19, 29, 19a, 29a, 19b, 29b).

6. The manufacturing method (S) according to one of claims 1 to 5, wherein the complementary profiles (14, 24, 14a, 24a, 14b, 24b) are of male/male or female/female type.

7. The manufacturing method (S) according to one of claims 1 to 6, wherein at least one of the closing assemblies (10, 20) comprises at least four complementary profiles, said complementary profiles (14a, 24a, 14b, 24b) of the at least one closing assembly (10, 20) forming at least two groups of complementary profiles respectively extending from at least two separate bases (18a, 28a, 18b, 28b), each of these separate bases (18a, 28a, 18b, 28b) being connected to the film (2) by means of the same base (18) and an associated connecting rod (19a, 29a, 19b, 29b).

8. The manufacturing method (S) according to one of claims 1 to 7, wherein the connecting rod (19, 29, 19a, 29a, 19b, 29b) centrally extends from the base (18, 28, 18a, 28a, 18b, 28b) of the corresponding closing assembly (10, 20).

9. The manufacturing method (S) according to one of claims 1 to 8, wherein the base (18, 28, 18a, 28a, 18b, 28b) comprises two longitudinal edges substantially extending in parallel to the longitudinal axis (X), and the manufacturing method (S) further comprises a step during which one of the longitudinal edges (30) of the base (18, 28, 18a, 28a, 18b, 28b) is locally fixed to the film (2).

10. The manufacturing method (S) according to one of claims 1 to 9, further comprising a step during which all or part of the complementary profiles (14, 24, 14a, 24a, 14b, 24b) of at least one of the closing assemblies (10, 20) is sequentially altered, the sequential alterations transversally extending to the longitudinal axis (X).

11. The manufacturing method (S) according to claim 10, wherein at least one of the complementary profiles (14, 24, 14a, 24a, 14b, 24b) is devoid of sequential alterations.

12. The manufacturing method (S) according to one of claims 1 to 11, wherein the connecting rod (19, 29, 19a, 29a, 19b, 29b) is discontinuous in its longitudinal direction along the longitudinal axis (X).

13. The manufacturing method (S) according to one of claims 1 to 12, wherein at least one of the closing assemblies comprises at least four complementary profiles (14, 24), and wherein the complementary profiles (14, 24) are integrally formed with at least one intermediate base (18c), connected to the base (18) by means of an intermediate connecting rod (19c) extending in parallel to the longitudinal axis (X) between the base (18) and the intermediate base (18c) and adapted to keep the intermediate base (18c) at a distance from the base (18).

14. The manufacturing method (S) according to claim 13, comprising at least two intermediate bases (18c), each of the intermediate bases (18c) being connected to the base (18) by means of a respective intermediate connecting rod (19c).

15. A bag (3) comprising main walls each comprising on an internal face (13, 23) a closing assembly (10, 20) comprising a series of complementary profiles (14, 24, 14a, 24a, 14b, 24b, 14c) which extend in parallel in a main direction extending along a longitudinal axis (X), the bag being **characterised in that** each closing assembly (10, 20) comprises at least three complementary profiles (14, 24) and **in that** it is obtained in accordance with a manufacturing method (S), according to one of claims 1 to 14.
